# EUROPÄISCHE PATENTSCHRIFT

(11) **EP 2 886 713 B1**
(45) Veröffentlichungstag und Bekanntmachung des Hinweises auf die Patenterteilung: **21.03.2018**
(21) Anmeldenummer: 14196173.0
(22) Anmeldetag: 04.12.2014
(51) Int. Cl.: D21H 25/04, D21H 27/42, D21B 1/02, D21B 1/06, D21C 5/02, D21C 9/00, D21C 9/08, B01J 19/08

(54) **Verfahren zum Behandeln von Papierfasern und Papierfaserbehandlungsvorrichtung**
Method for treating paper fibres and paper fibre treating device
Procédé de traitement de fibres de papier et dispositif de traitement de fibres de papier

(30) Priorität: 20.12.2013 DE 102013226936
(43) Veröffentlichungstag der Anmeldung: 24.06.2015
(73) Patentinhaber: Siemens Aktiengesellschaft, 80333 München (DE)
(72) Erfinder: Baldauf, Manfred, 91056 Erlangen (DE); Hartmann, Werner, 91085 Weisendorf (DE); Wittendorfer, Uwe, 89551 Königsbronn (DE)

(56) Entgegenhaltungen:
- WO-A1-2006/134064
- WO-A1-2008/102408
- DE-A1- 10 359 847
- DE-A1-102005 050 845
- US-A- 3 554 825

## Beschreibung

Die Erfindung betrifft ein Verfahren zum Behandeln von Papierfasern und eine Papierfaserbehandlungsvorrichtung.

Bei der Herstellung von Papier werden Papierfasern, also Zellstoff und/oder Holzstoff und/oder andere zur Papierherstellung geeignete Fasern wie beispielsweise Baumwollfasern, Blattfasern, Grasfasern, Kunststofffasern, Palmenfasern oder Rindenfasern, in einer nassen Prozesskette behandelt. Hauptprozessschritte sind hier ein Bleichen der Papierfasern in einer wässrigen Fasersuspension, ein Überführen der Papierfasern aus der wässrigen Suspension über ein Sieb in die Blattformmaschine, das Formen des Blattes in der Blattformmaschine, das Entwässern des nassen Blattes sowie das Trocknen des Papiers. All diese Prozessschritte sind sehr energieintensiv und verbrauchen große Mengen an Wasser. Da das Wasser von den Resten der insbesondere für das Bleichen der Papierfasern verwendeten Chemikalien und der entsprechenden chemischen Reaktionen verschmutzt ist, muss das verwendete Wasser im Anschluss aufwändig gereinigt werden. Weiterhin ist das Wasser durch erhebliche Mengen an organischen Reststoffen (z.B. Faserresten, etc.) sowie chemischen Zusätzen (z.B. von Bioziden zur Vermeidung biologischer Abbauprozesse) verunreinigt, so dass nachfolgende, insbesondere biologische, Klärstufen mit problematischen Abwässern beaufschlagt werden.

Die US 3 554 825 A offenbart ein Verfahren für das Verbinden von Zellulose-Oberflächen. Dabei werden besagte Oberflächen oxidiert, indem die Oberflächen in im Wesentlichen trockenen Zustand mit Ozon oxidiert und damit aktiviert werden, gefolgt von einem Drücken der Zellulose-Oberflächen in Gegenwart von Feuchtigkeit aneinander. Schließlich werden die aneinander gepressten Oberflächen getrocknet, um die Bindung zu realisieren.

Die DE 10 2005 050 845 A1 offenbart eine Vorrichtung und ein Verfahren zur Herstellung oder Behandlung eines Prozessgutes, beispielsweise trockenen Papiers, bei der Herstellung oder Behandlung von Papier, Karton oder Pappe. Dabei wird das Prozessgut mit beidseitig großflächigem Plasma unter Atmosphärendruck in Kontakt gebracht. Das Prozessgut wird dabei über eine Walze abgerollt.

Die WO 2006/134064 A1 offenbart ein Verfahren zur Behandlung eines Prozessgutes bei der Herstellung von Papier, Karton oder Pappe. Dabei wird ein großflächiges Plasma oder eine Gasentladung appliziert und es wirken bei der Plasmaerzeugung und/oder bei der Gasentladung entstehende Radikale 59 auf das Prozessgut ein. Dabei ist vorgesehen, dass an unterschiedlichen Prozessstufen Radikale unterschiedlicher Art verwendet werden. Bei dem Prozessgut kann es sich dabei um trockene Fasern handeln.

Die WO 2008/102408 A1 offenbart ein Verfahren zum Behandeln von Materialien mit einem atmosphärischen Plasma.

Die DE 103 59 847 A1 offenbart ein Verfahren zur Herstellung von Zellulosefasern umfassenden Produkten. Dabei wird von mindestens einer Abwickelvorrichtung mindestens ein bahnförmiges Material abgewickelt und nachfolgend durch eine plasmaerzeugende Vorrichtung geführt.

Es ist die Aufgabe der vorliegenden Erfindung, Energieverbrauch und Wasserverbrauch bei der Herstellung von Papier zu reduzieren.

Diese Aufgabe wird von einem Verfahren zum Behandeln von Papierfasern und einer Papierfaserbehandlungsvorrichtung nach den unabhängigen Patentansprüchen gelöst. Vorteilhafte Ausführungsformen ergeben sich aus den abhängigen Patentansprüchen, der Beschreibung und den Figuren.

Um den Energieverbrauch und Wasserverbrauch bei der Herstellung von Papier zu reduzieren sind bei einem erfindungsgemäßen Verfahren zum Behandeln von Papierfasern, also insbesondere von Zellstoff und/oder Holzstoff, mehrere Schritte vorgesehen. Zunächst ist hier ein Einbringen von trockenen Papierfasern in ein Reaktionsgefäß vorgesehen, gefolgt von einem Durchmischen der trockenen Papierfasern mit zumindest einem aktivierten Gas und schließlich ein Freisetzen der trockenen Papierfasern aus dem Reaktionsgefäß. Das Reaktionsgefäß kann auch ein chemischer Reaktor sein. Das aktivierte Gas kann hier insbesondere chemische Radikale beinhalten. Es kann sich bei dem aktivierten Gas auch um eine Gasmischung handeln. Insbesondere kann auch eine Blattbildung direkt aus den trockenen Papierfasern erfolgen.

Dieses Verfahren hat den Vorteil, dass die Papierfasern ohne Wasser behandelt werden und in Folge keine Wasserverschmutzung mit chemischen oder biologischen Rückständen erfolgen kann. Es ermöglicht ein Bleichen und ein Blattformen der Papierfasern ohne Wasser, was auch eine Energieeinsparung nach sich zieht. Zudem ist nun bei einem Blattformen kein Vakuumabsaugen von Flüssigkeit aus einer nassen Papiermasse erforderlich, welches in den bekannten Verfahren zur Folge hat, dass Vorder- und Rückseite der hergestellten Papierblätter eine unterschiedliche Oberflächenstruktur aufweisen. Somit wird durch die Erfindung auch eine gleichmäßige Struktur von Vorder- und Rückseite eines hergestellten Papierblattes ermöglicht.

In einer vorteilhaften Ausführungsvariante ist vorgesehen, dass ein Aktivieren des Gases durch nicht-thermische Gasentladungen erfolgt. Insbesondere geschieht dies im Inneren des Reaktionsgefäßes, wiederum insbesondere bei Atmosphärendruck. Das hat den Vorteil, dass über die nicht-thermischen Gasentladungen einer Brandgefahr der Papierfasern vorgebeugt wird und bei einem Aktivieren des Gases in dem Reaktionsgefäß eine unerwünschte Reaktion des aktivierten Gases mit anderen Stoffen vermieden werden kann. Möglicherweise ungesunde oder gefährliche Stoffe müssen nicht transportiert werden, da sie in situ am Ort ihres Wirkens im Reaktionsgefäß hergestellt werden können. Ein Aktivieren des Gases bei Atmosphärendruck hat den Vorteil, dass das Aktivieren einfach in bestehende Fertigungsabläufe integriert werden kann und insbesondere für große Mengen an Papierfasern günstig ist, da ein Evakuieren insbesondere des Reaktionsgefäßes nicht erforderlich ist.

Hier kann vorgesehen sein, dass das Aktivieren des Gases durch eine gepulste Koronaentladung und/oder eine Gleichstromkoronaentladung und/oder eine Wechselstromkoronaentladung und/oder eine dielektrische Sperrschichtentladung und/oder eine stille Sperrschichtentladung und/oder eine Druckglimmentladung bei Atmosphärendruck und/oder ein induktiv gekoppeltes Plasma und/oder eine nicht-thermische Plasmafahne erfolgt. Das hat den Vorteil, dass besonders große Gasvolumen schnell und günstig aktiviert werden können.

In einer besonders vorteilhaften Ausführungsform ist ein Verwenden eines Bleichgases als aktiviertes Gas zum Bleichen der Papierfasern, insbesondere ein Verwenden von Sauerstoff und/oder Chlorgas vorgesehen. Das hat den Vorteil, dass herkömmliche, gegebenenfalls auch weitere giftige Bleichstoffe eingespart werden können und für das Bleichen der Papierfasern keine Wasserverschmutzung mehr in Kauf genommen werden muss.

In einer weiteren vorteilhaften Ausführungsform ist ein Verwenden eines Aktivierungsgases als aktiviertes Gas zum Aktivieren einer Oberfläche der trockenen Papierfasern vorgesehen, insbesondere ein Verwenden von Argon und/oder Luft und/oder Wasserdampf und/oder einer Mischung dieser Gase. Danach erfolgt ein trockenes Blattbilden aus den Papierfasern mit den aktivierten Oberflächen. Das hat den Vorteil, dass die aktivierten Oberflächen der trockenen Papierfasern eine erhöhte Bindungsneigung aufweisen können, so dass sich die trockenen Papierfasern stabil chemisch miteinander binden. Hierfür ist dann kein Wasser erforderlich und in Folge auch kein energieaufwendiges Trocknen im Blattbildungsprozess. Es wird also der Energieverbrauch deutlich reduziert. Zudem sind dann weder Vakuumpumpen noch eine Energiezufuhr in Form von Wärmetragern, z.B. Heißdampf, zum Trocknen einer nassen Papiermasse notwendig, so dass auch hier einerseits Trocknungsenergie gespart werden kann und andererseits Vorder- und Rückseite des hergestellten Papiers keine ungleiche Oberflächenstruktur wie in herkömmlichen Verfahren mehr aufweisen.

In einer weiteren Ausführungsform ist vorgesehen, die Papierfasern mehrfach hintereinander zu durchmischen, und zwar jeweils mit einem unterschiedlichen aktivierten Gas. Insbesondere erfolgt das Durchmischen in jeweils unterschiedlichen Bereichen des Reaktionsbehälters. Das hat den Vorteil, dass einerseits eine räumlich kompakte Behandlung der Papierfasern erreicht werden kann, da innerhalb nur eines Reaktionsgefäßes mehrere Prozessschritte durchlaufen werden können. Auch ist so eine stufenweise Behandlung der Papierfasern möglich, und unterschiedliche, durch die jeweiligen aktivierten Gase hervorgerufene Prozesse können aufeinander aufbauen.

Es kann auch vorgesehen sein, dass das Einbringen und/oder Freisetzen der Papierfasern in und/oder aus dem Reaktionsbehälter in vertikaler Richtung durch Schwerkraft oder einen Gasstrom, insbesondere einen Gasstrom des aktivierten Gases, erfolgt. Das hat den Vorteil, dass Gas und Papierfasern besonders gut durchmischt werden, so dass das aktivierte Gas hier besonders effizient mit den Papierfasern reagiert.

Es kann auch vorgesehen sein, dass das Einbringen und/oder Freisetzen der Papierfasern in und/oder aus dem Reaktionsbehälter in horizontaler Richtung durch ein Fließband und/oder einen Gasstrom, insbesondere einen Gasstrom des aktivierten Gases, der die Papierfasern in Form einer Wirbelschicht transportiert, erfolgt. Das hat den Vorteil, dass das Verfahren besonders gut in bestehende horizontal ablaufende Fertigungsprozesse integrierbar ist.

Die Erfindung beinhaltet ebenfalls eine Papierfaserbehandlungsvorrichtung mit einem Reaktionsgefäß zum Behandeln von trockenen Papierfasern mit einem aktivierten Gas, mit einer Transportvorrichtung zum Einbringen der trockenen Papierfasern in das Reaktionsgefäß und Freisetzen der Papierfasern aus dem Reaktionsgefäß, sowie mit einer Aktiviereinrichtung, die über Elektroden verfügt, um das Gas zu aktivieren. Dabei ist die Aktiviereinrichtung insbesondere in dem Reaktionsgefäß angeordnet. Diese Vorrichtung bringt die dem entsprechenden Verfahren zugeordneten, oben beschriebenen Vorteile mit sich.

In einer Ausführungsform ist hier vorgesehen, dass die Transportvorrichtung einen Turmreaktor aufweist, in dem die Papierfasern vertikal mit oder entgegen einem Gasstrom des aktivierten Gases transportiert werden, und/oder die Transportvorrichtung ein Wirbelbett mit einem vertikalen Gasstrom des aktivierten Gases aufweist und/oder die Transportvorrichtung ein Fließband aufweist. Das hat im Falle des vertikalen Transportierens den Vorteil, dass eine besonders gute Durchmischung von Gas und Papierfasern erreicht werden kann. Das horizontale Transportieren und die resultierende horizontale Verteilung der Papierfasern haben den Vorteil, dass der Blattformungsprozess besonders gut vonstattengehen kann.

In einer vorteilhaften Ausführungsform ist vorgesehen, dass die Aktiviereinrichtung koaxial röhrenförmige oder maschenförmige Elektroden und/oder eine Draht-Plattenelektroden-Anordnung aufweist und insbesondere innerhalb des Reaktionsgefäßes angeordnet ist. Das hat den Vorteil, dass so große Gasmengen effektiv aktiviert werden können. Bei einer Anordnung innerhalb des Reaktionsgefäßes ist die Aktiviereinrichtung hier besonders effizient, da das aktivierte Gas so direkt am gewünschten Ort erzeugt wird und keine Verluste, wie sie beispielsweise bei einem Transport erfolgen können, eintreten.

Dabei ist vorgesehen, dass die Transportvorrichtung ein Fließband aufweist und dass eine erste Elektrode der Aktiviereinrichtung über dem Fließband angeordnet ist und eine zweite Elektrode der Aktiviereinrichtung unter dem Fließband angeordnet ist oder in das Fließband integriert ist, wobei ein vertikaler, aufwärts gerichteter Gasstrom von der zweiten zur ersten Elektrode vorliegt. Hierbei ist der Gasstrom ein Strom des zu aktivierenden Gases. Das hat den Vorteil, dass ein Aktivieren des Gases ortsgenau erfolgt und gegebenenfalls auch ein Wirbelbett mit dem aktivierten Gas erzeugt werden kann, so dass hier das Gas gleichzeitig eine mehrfache Funktion hat. Auch ist so über ein Verwenden unterschiedlicher Gase in unterschiedlichen Bereichen des Fließbandes, insbesondere ein Bleichen und Blattbilden auf dem gleichen Fließband an unterschiedlichen Positionen möglich.

Weitere Merkmale der Erfindung ergeben sich aus der folgenden Beschreibung eines bevorzugten Ausführungsbeispiels der Erfindung sowie anhand der Figur. Dabei zeigt:

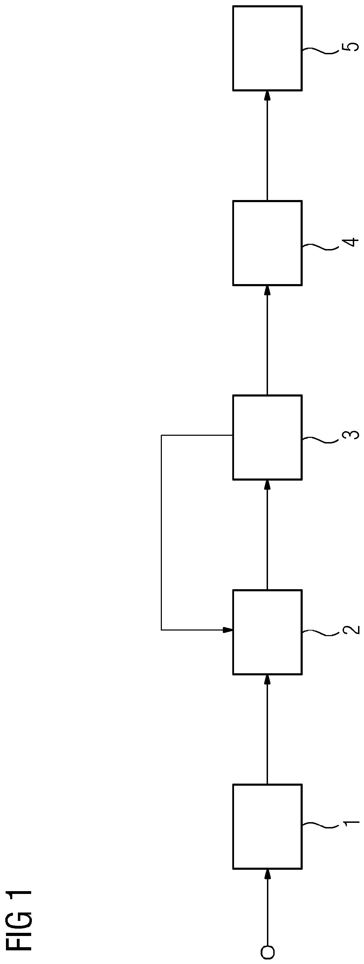

- FIG 1: ein schematisches Flussdiagramm einer Ausführungsvariante eines erfindungsgemäßen Verfahrens.

In FIG 1 ist ein schematisches Blockdiagramm einer beispielhaften Ausführungsvariante des Verfahrens gezeigt. Zunächst erfolgt hier ein Einbringen 1 von trockenen Papierfasern in ein Reaktionsgefäß. Dieses Reaktionsgefäß ist beispielsweise ein großvolumiger Verfahrensreaktor. In diesem Verfahrensreaktor ist nun beispielsweise eine Elektrodenanordnung vorhanden, so dass im Inneren des Reaktorgefäßes in einem zweiten Schritt ein Aktivieren 2 eines Gases oder einer Gasmischung erfolgen kann. So wird in dem zweiten Schritt des Aktivierens 2 ein reaktives Gas über eine Gasentladung erzeugt. Dies kann beispielsweise über eine gepulste Koronaentladung oder einer Kombination aus Gleichstrom- und Wechselstromkoronaentladungen, welche ebenfalls gepulst sind erfolgen.

Im gezeigten Beispiel wird nun beispielsweise zunächst ein Bleichgas zum Bleichen der Papierfasern verwendet, beispielsweise Sauerstoff der durch das Aktivieren 2 in atomaren Sauerstoff sowie Ozon umgewandelt wird. Es erfolgt dann ein Durchmischen 3 des atomaren, vor Ort hergestellten Sauerstoffs (Ozons) mit den trockenen Papierfasern. Hier kann beispielsweise durch ein Einbringen der Papierfasern von oben in vertikaler Richtung in den Reaktionsbehälter und ein Entgegenblasen des Sauerstoff-Gasstroms von unten eine besonders gute Durchmischung erzielt werden. Es kann nun beispielsweise im unteren Bereich des Reaktionsgefäßes ein Fließband angeordnet sein, welches die unter dem Einfluss der Schwerkraft durch den Gasstrom gebremsten, aber dennoch herab fallenden Papierfasern in einen weiteren Bereich des Reaktionsgefäßes befördert. Dort kann nun beispielsweise ein weiteres Gas wie ein Aktivierungsgas zum Aktivieren der Oberfläche der trockenen, inzwischen gebleichten Papierfasern eingesetzt werden.

Es erfolgt also hier nach dem Durchmischen 3 ein weiteres Aktivieren 2 eines Gases insbesondere von Argon und/oder Luft und/oder Wasserdampf bzw. einer Mischung dieser Gase, so dass die Oberfläche der trockenen Papierfasern für eine dauerhafte Bindung mit anderen Papierfasern vorbereitet wird. Nach dem Aktivieren 2 des Aktivierungsgases erfolgt nun ein erneutes Durchmischen 3, was beispielsweise durch ein Blasen des aktivierten Aktivierungsgases von unten durch das Fließband, auf welchem die Papierfasern in den weiteren Bereich des Reaktionsgefäßes transportiert wurden, erfolgt. Es folgt dann ein Freisetzen 4 der Papierfasern mit den aktivierten Oberflächen aus dem Reaktionsgefäß und schließlich ein trockenes Blattbilden 5 dieser oberflächenbehandelten Papierfasern. Da kein flüssiges Wasser in den Papierfasern gebunden ist entfällt auch der aufwendige Trockenprozess. Zudem ist bei dem Bleichen kein verschmutztes Wasser angefallen.

Anstelle der beschriebenen Plasmabehandlung von Fasern direkt zwischen den das Arbeitsgas aktivierenden Elektroden kann auch eine "Plasmafahne" zur Faserbehandlung eingesetzt werden, bei der der Gasstrom zunächst in einem nicht mit Papierfasern beaufschlagten Entladungsbereich durch nichtthermische Plasmen (gepulste Koronaentladung und/oder eine Gleichstromkoronaentladung und/oder eine Wechselstromkoronaentladung und/oder eine dielektrische Sperrschichtentladung und/oder eine stille Sperrschichtentladung und/oder eine Druckglimmentladung bei Atmosphärendruck und/oder ein induktiv gekoppeltes Plasma und/oder eine nicht-thermische Plasmafahne) aktiviert wird und anschließend einem Gasstrom zugemischt wird, welcher die Papierfasern trägt.

## Patentansprüche

1. Verfahren zum Behandeln von Papierfasern, mit den Schritten
- Einbringen (1) von trockenen Papierfasern in ein Reaktionsgefäß;
- Durchmischen (3) der trocken Papierfasern mit zumindest einem aktivierten Gas;
- Freisetzen (4) der trockenen Papierfasern aus dem Reaktionsgefäß.

2. Verfahren nach Anspruch 1, **gekennzeichnet durch** ein
- Aktivieren (2) des Gases, insbesondere in dem Reaktionsgefäß, durch nicht-thermische Gasentladungen, insbesondere bei Atmosphärendruck.

3. Verfahren nach Anspruch 2, **gekennzeichnet durch** ein
- Aktivieren (2) des Gases durch eine gepulste Coronaentladung und/oder eine Gleichstrom- Coronaentladung und/oder eine Wechselstrom- Coronaentladung und/oder eine dielektrische Sperrschicht-Entladung und/oder eine stille Sperrschicht-Entladung und/oder eine Druck-Glimm-Entladung bei Atmosphärendruck und/oder ein induktiv gekoppeltes Plasma und/oder eine nicht-thermische Plasmafahne.

4. Verfahren nach einem der vorhergehenden Ansprüche, **gekennzeichnet durch** ein
- Verwenden eines Bleichgases zum Bleichen der Papierfasern, insbesondere von Sauerstoff und/oder Chlorgas.

5. Verfahren nach einem der vorhergehenden Ansprüche, **gekennzeichnet durch** ein
- Verwenden eines Aktivierungsgases zum Aktivieren einer Oberfläche der trockenen Papierfasern, insbesondere von Argon und/oder Luft und/oder Wasserdampf und/oder einer Mischung dieser Gase; sowie ein
- trockenes Blattbilden (5) aus den Papierfasern mit den aktivierten Oberflächen.

6. Verfahren nach einem der vorhergehenden Ansprüche, **gekennzeichnet durch** ein
- Einbringen (1) und/oder Freisetzen (4) der Papierfasern in und/oder aus dem Reaktionsbehälter in vertikaler Richtung durch Schwerkraft oder einen Gasstrom.

7. Verfahren nach einem der vorhergehenden Ansprüche, **gekennzeichnet durch** ein
- Einbringen (1) und/oder Freisetzen (4) der Papierfasern in und/oder aus dem Reaktionsbehälter in horizontaler Richtung durch ein Fließband und/oder einen Gasstrom, der die Papierfasern in Form einer Wirbelschicht transportiert.

8. Papierfaserbehandlungsvorrichtung mit einem Reaktionsgefäß zum Behandeln von trockenen Papierfasern mit einem aktivierten Gas, mit einer Transportvorrichtung zum Einbringen (1) der trockenen Papierfasern in das Reaktionsgefäß und Freisetzen (4) der Papierfasern aus dem Reaktionsgefäß, sowie mit einer Aktiviereinrichtung, die über Elektroden verfügt, um das Gas zu Aktivieren (2),
**dadurch gekennzeichnet, dass**
die Transportvorrichtung ein Fließband aufweist und eine erste Elektrode der Aktiviereinrichtung über dem Fließband angeordnet ist und eine zweite Elektrode der Aktiviereinrichtung unter dem Fließband angeordnet ist oder in das Band des Fließbands integriert ist, wobei ein vertikaler, aufwärtsgerichteter Gasstrom von der zweiten zur ersten Elektrode vorliegt.

9. Papierfaserbehandlungsvorrichtung nach Anspruch 8, **dadurch gekennzeichnet, dass**
die Aktiviereinrichtung koaxial-röhrenförmige oder maschenförmige Elektroden und/oder eine Draht-Platten-Elektrodenanordnung aufweist und insbesondere innerhalb des Reaktionsgefäßes angeordnet ist.

## Claims

1. Method for treating paper fibres, having the steps
- introducing (1) dry paper fibres into a reaction vessel;
- mixing (3) the dry paper fibres with at least one activated gas;
- releasing (4) the dry paper fibres from the reaction vessel.

2. Method according to claim 1, **characterised by** an
- activation (2) of the gas, in particular in the reaction vessel, by means of non-thermal gas discharges, in particular at atmospheric pressure.

3. Method according to claim 2, **characterised by** an
- activation (2) of the gas by means of a pulsed corona discharge and/or a direct current corona discharge and/or an alternating current corona discharge and/or a dielectric barrier layer discharge and/or a silent barrier layer discharge and/or a pressure-glow discharge at atmospheric pressure and/or an inductively coupled plasma and/or a non-thermal plasma plume.

4. Method according to one of the preceding claims,
**characterised by** a
- use of a colourless gas for discolouring the paper fibres, in particular oxygen and/or chlorine gas.

5. Method according to one of the preceding claims,
**characterised by** a
- use of an activation gas for activating a surface of the dry paper fibres, in particular argon and/or air and/or water vapour and/or a mixture of these gases; as well as
- dry sheet forming (5) from the paper fibres with the activated surfaces.

6. Method according to one of the preceding claims,
**characterised by** an
- introduction (1) and/or release (4) of the paper fibres into and/or out of the reaction vessel in the vertical direction by means of gravity or a gas flow.

7. Method according to one of the preceding claims,
**characterised by** an
- introduction (1) and/or release (4) of the paper fibres into and/or out of the reaction vessel in the horizontal direction by means of a conveyor belt and/or a gas flow, which transports the paper fibres in the form of a fluidised bed.

8. Paper fibre treatment device having a reaction vessel for treating dry paper fibres with an activated gas, having a transport device for introducing (1) the dry paper fibres into the reaction vessel, and releasing (4) the paper fibres from the reaction vessel, and having an activation device, which has electrodes in order to activate the gas (2),
**characterised in that**
the transport device has a conveyor belt and a first electrode of the activation device is arranged above the conveyor belt and a second electrode of the activation device is arranged below the conveyor belt or is integrated into the belt of the conveyor belt, wherein a vertical upwardly directed gas flow is present between the second and the first electrode.

9. Paper fibre treatment device according to claim 8,
**characterised in that**
the activation device has coaxial, tubular or mesh-type electrodes and/or a wire-plate electrode assembly and is arranged in particular within the reaction vessel.

## Revendications

1. Procédé de traitement de fibres de papier, comprenant les stades
- introduction (1) de fibres de papier sèches dans un récipient de réaction;
- mélange (3) des fibres de papier sèches à au moins un gaz activé;
- retrait (4) des fibres de papier sèches du récipient de réaction.

2. Procédé suivant la revendication 1, **caractérisé par** une
- activation (2) du gaz, notamment dans le récipient de réaction, par des décharges non thermiques dans un gaz, notamment à la pression atmosphérique.

3. Procédé suivant la revendication 2, **caractérisé par** une
- activation (2) du gaz par une décharge corona pulsée et/ou une décharge corona à courant continu et/ou une décharge corona à courant alternatif et/ou une décharge à couche d'arrêt diélectrique et/ou une décharge à couche d'arrêt silencieuse et/ou une décharge à effluve sous pression à la pression atmosphérique et/ou un plasma à couplage inductif et/ou une torche à plasma non thermique.

4. Procédé suivant l'une des revendications précédentes,
**caractérisé par** une
- utilisation d'un gaz de blanchiment pour blanchir des fibres à papier, notamment d'oxygène et/ou de chlore gazeux.

5. Procédé suivant l'une des revendications précédentes,
**caractérisé par** une
- utilisation d'un gaz d'activation pour activer une surface des fibres de papier sèches, notamment d'argon et/ou d'air et/ou de vapeur d'eau et/ou d'un mélange de ces gaz, ainsi qu'une
- transformation (5) à sec en feuilles des fibres de papier ayant les surfaces activées.

6. Procédé suivant l'une des revendications précédentes, **caractérisé par** une
- introduction (1) dans le récipient de réaction et/ou un retrait (4) du récipient de réaction des fibres de papier suivant la direction verticale par la force de gravité ou par un courant gazeux.

7. Procédé suivant l'une des revendications précédentes,
**caractérisé par** une
- introduction (1) dans le récipient de réaction et/ou un retrait (4) du récipient de réaction des fibres de papier dans la direction horizontale par un tapis roulant et/ou un courant gazeux, qui transporte les fibres de papier sous la forme d'un lit fluidisé.

8. Installation de traitement de fibres de papier, comprenant un récipient de réaction pour traiter les fibres de papier sèches par un gaz activé, un dispositif de transport pour introduire (1) les fibres de papier sèches dans le récipient de réaction et retirer (4) les fibres de papier du récipient de réaction, ainsi qu'un dispositif d'activation, qui dispose d'électrodes, pour activer (2) le gaz,
**caractérisée en ce que**
le dispositif de transport comporte un tapis roulant et une première électrode du dispositif d'activation est disposée au dessus du tapis roulant et une deuxième électrode du dispositif d'activation est disposée en dessous du tapis roulant ou est intégrée dans le tapis du tapis roulant, un courant gazeux vertical dirigé vers le haut allant de la deuxième à la première électrode.

9. Installation de traitement de fibres de papier suivant la revendication 8,
**caractérisé en ce que**
le dispositif d'activation a des électrodes tubulaires coaxiales ou en forme de maille et/ou un agencement d'électrodes à plaque-fil métallique et est disposé notamment à l'intérieur du récipient de réaction.
